# FASCICULE DE BREVET EUROPEEN

(11) **EP 1 532 857 B1**
(45) Date de publication et mention de la délivrance du brevet: **16.04.2008**
(21) Numéro de dépôt: 03358018.4
(22) Date de dépôt: 18.11.2003
(51) Int. Cl.: A01D 51/00

(54) **Tête de récolte pour machine de ramassage de produits agricoles répandus sur le sol**
Erntegerät für Maschinen zum Aufsammeln von auf dem Boden verstreuten Früchten
Harvester head for machines for gathering agricultural products spread on ground

(43) Date de publication de la demande: 25.05.2005
(73) Titulaire: Pellenc Iberica S.L., 23009 Jaen (ES)
(72) Inventeur: Bouyou, Bertrand, 23009 Jaen (ES)
(74) Mandataire: Marek, Pierre

(56) Documents cités:
- WO-A-97/47177
- GB-A- 1 065 048
- GB-A- 2 034 607
- US-A- 2 854 808

## Description

La présente invention concerne une tête de récolte selon le préambule de la revendication 1 pour machine de ramassage de produits agricoles répandus sur le sol, en particulier de fruits de petites tailles tels qu'olives, noix, noisettes, châtaignes, amandes, pistaches, pruneaux, mirabelles, etc., tombés sur le sol, naturellement ou sous l'action de dispositifs de secouage mécaniques. L'invention vise également les machines pourvues d'une telle tête de récolte.

Plus précisément, l'invention concerne une tête de récolte comprenant un tambour de ramassage monté tournant autour d'un axe occupant une position horizontale ou approximativement horizontale en cours de travail, ce tambour de ramassage étant par exemple constitué par une brosse pourvue de poils souples ou par un moyeu muni de pales radiales souples de balayage angulairement espacées, ledit tambour de ramassage dont la portion avant active tourne vers le haut étant logé dans une enveloppe ou carter recouvrant sa partie supérieure et sa partie antérieure, le bord avant de ce carter enveloppant s'étendant transversalement à distance réduite du sol, de sorte à permettre le passage des fruits tombés, au-dessous dudit bord. De la sorte, lors de l'avancement de la machine pourvue de cette tête de récolte, les fruits répandus sur le sol passent sous le bord inférieur frontal de l'enveloppe ; ils sont ensuite soulevés par le tambour de ramassage tournant et entraînés par ce dernier, en étant contenus et guidés par l'enveloppe lors de leur parcours ascensionnel, puis éjectés vers l'arrière où ils sont reçus par un convoyeur qui les achemine jusqu'à une benne collectrice.

Une tête de récolte de ce genre est, par exemple, décrite dans le document EP 1.224.854 A1.

Selon le mode d'exécution décrit dans ce document, le bord inférieur avant du carter est muni d'une bavette souple appelée à glisser sur le sol, devant la zone de balayage, en cours de travail, afin d'éviter que les fruits ne soient projetés en avant de la tête de récolte par le tambour de ramassage.

En cours d'exploitation de la machine décrite dans le document susmentionné, il a été constaté qu'il arrive, lorsque la quantité de fruits à ramasser est relativement dense, ou lorsque ceux-ci sont mêlés à des débris d'origines diverses (brindilles, branches, feuilles, pierres, etc.), que les fruits ne sont pas ramassés par la tête de récolte lors de l'avancement de ladite machine, mais repoussés vers l'avant avec lesdits débris, en formant des amas plus ou moins importants, comme le ferait une machine du genre chasse-neige ou bulldozer.

La machine décrite dans le document GB-A-1.065.048 présente sensiblement le même inconvénient. En effet, le dispositif ramasseur de fruits décrit dans ce document comporte, en avant du tambour de ramassage, un ensemble mobile de bas en haut et constitué par une rangée de bagues ou rouleaux montés avec un jeu important sur un axe horizontal et appelés à rouler sur le sol et sur les fruits, ces rouleaux étant surmontés d'un écran constitué d'une tôle transversale. De façon comparable à ce qui a été précédemment souligné au sujet de la machine décrite dans le document EP-1.224.854, lorsque la quantité de fruits à ramasser est relativement importante ou lorsque les fruits sont trop gros par rapport aux bagues, ou lorsqu'ils sont mêlés à des détritus de nature diverse, ils ne sont pas ramassés par la tête de récolte, mais repoussés vers l'avant par celle-ci, en formant des amas plus ou moins importants. Pour pallier cet inconvénient, l'auteur du document GB-1.065.048 a prévu de régler la hauteur de l'ensemble mobile verticalement, c'est-à-dire la distance de la base de cet ensemble par rapport au sol, en fonction de la grosseur des fruits à ramasser. Toutefois, cela impose un réglage supplémentaire qui ne peut résoudre le problème posé de façon satisfaisante, si l'on considère que les fruits d'une même espèce peuvent avoir des tailles différentes et que les sols sur lesquels reposent les fruits détachés des arbres ne sont jamais rigoureusement plats.

Un objet de l'invention est d'apporter une solution efficace au problème susmentionné. Cette solution est exposée dans la partie caractérisante de la revendication 1.

Selon une disposition caractéristique, la jupe active est montée avec une aptitude de pivotement autour d'un axe horizontal, par l'intermédiaire de sa partie supérieure.

Selon un autre mode d'exécution avantageux, la face ou enveloppe interne de la jupe active est réalisée dans un matériau souple, et ladite jupe est munie d'un ou plusieurs éléments de rigidification horizontaux.

Selon un autre mode d'exécution avantageux, la jupe mobile ou jupe active est reliée, latéralement, à des bras pivotants, de sorte à pouvoir être poussée sur la trajectoire des éléments souples de balayage du tambour de ramassage et à se trouver entraînée vers le haut par friction au contact desdits éléments souples.

La présence de la jupe active selon l'invention permet une adaptation automatique de la hauteur du passage ménagé à l'avant de la tête de récolte, au volume variable des fruits et débris répandus sur le sol, rencontrés au fur et à mesure de l'avancement de la machine de ramassage dans le verger ou dans le champ, sans provoquer un phénomène de râtelage à l'avant de ladite machine.

Les buts, caractéristiques et avantages ci-dessus, et d'autres encore, ressortiront mieux de la description qui suit et des dessins annexés dans lesquels :
La figure 1 est une vue en perspective d'un exemple de réalisation de machine de ramassage pourvue d'une tête de récolte perfectionnée selon l'invention, représentée montée à l'arrière d'un tracteur agricole.

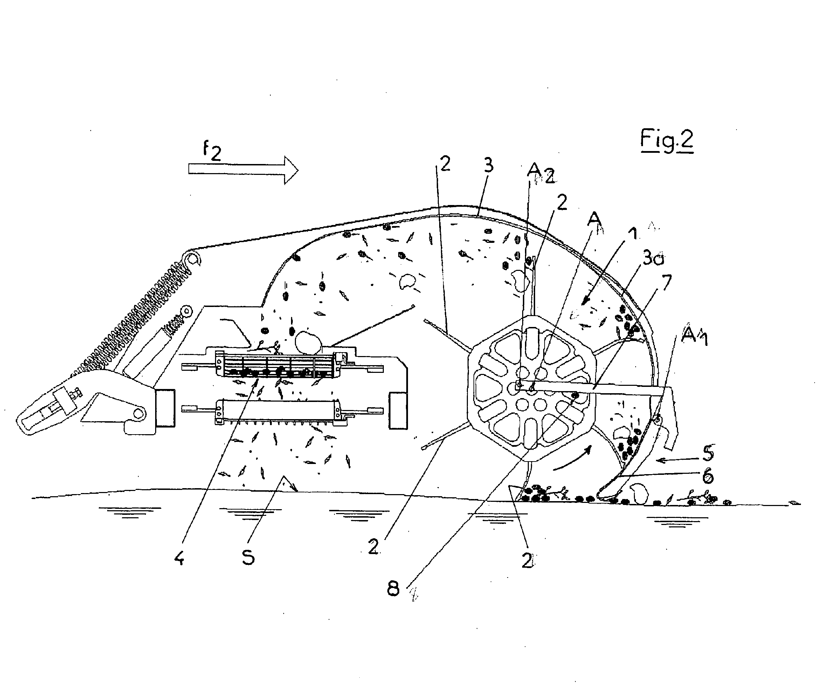

La figure 2 est une vue en coupe longitudinale de cette tête de récolte.
La figure 3 est une vue de détail et en coupe verticale illustrant un exemple de réalisation avantageux de la jupe active et des moyens assurant les mouvements de soulèvement et d'abaissement de cette dernière, en cours de travail.
La figure 4 est une vue de côté et de détail, à plus grande échelle, illustrant le montage et la conformation de la jupe active.
Les figures 5 à 7 sont des vues à caractère schématique illustrant le fonctionnement de la tête de récolte perfectionnée selon les figures 1 à 4.

On se reporte auxdits dessins pour décrire un exemple de réalisation avantageux, quoique nullement limitatif, de la tête de récolte selon l'invention.

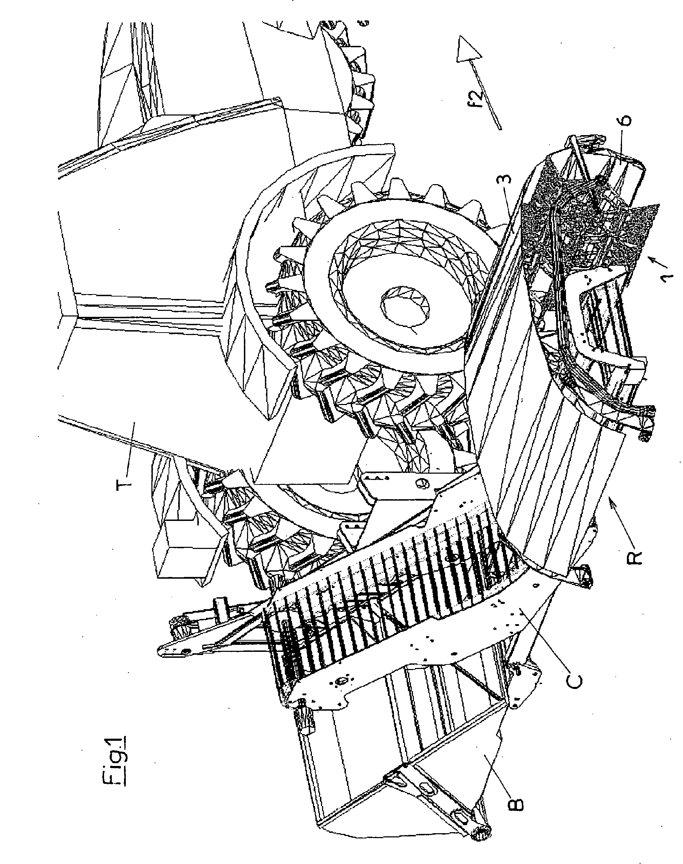

Cette tête de récolte R constitue le système de ramassage d'une machine attelable à un tracteur T ou automotrice, comportant encore notamment un convoyeur C, de préférence constitué par un tapis transporteur trieur, permettant d'acheminer les produits ramassés jusqu'à un récipient collecteur, par exemple constitué par une benne basculante B (Figure 1). Toutefois, la présente invention s'applique essentiellement à la tête de récolte, de sorte que seule cette dernière sera décrite dans la suite du présent exposé.

Cette tête de récolte comprend un tambour de ramassage rotatif 1. Ce tambour rotatif peut être constitué par une brosse pourvue de poils souples, ou par un moyeu muni de pales radiales souples de balayage 2, angulairement espacées, par exemple huit pales radiales espacées de 45°.

On décrit ci-après un mode d'exécution suivant lequel le tambour de ramassage 1 est constitué par un moyeu muni de pales radiales souples, mais ledit tambour pourrait aussi être constitué par une brosse cylindrique dont les poils souples rempliraient une fonction comparable à celle desdites pales radiales.

Les pales radiales 2 s'étendent parallèlement à l'axe du tambour, sur toute la longueur ou presque de celui-ci. Elles sont réalisées dans un matériau souple, par exemple en caoutchouc ou en élastomère, ou par des brosses ou balais à poils souples.

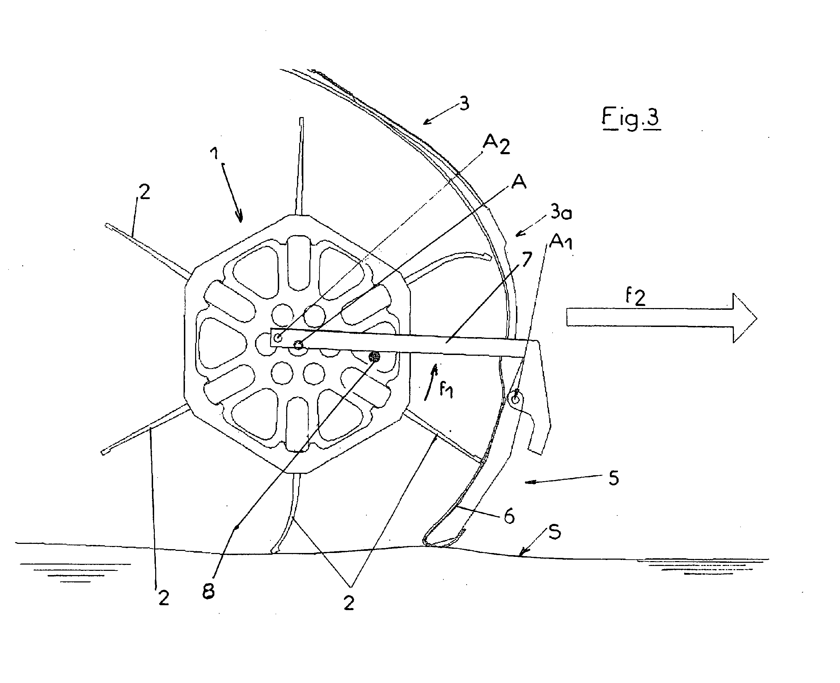

L'entraînement en rotation vers le haut (selon flèche f1 de la figure 3) de ce tambour de ramassage 1 autour d'un axe horizontal ou approximativement horizontal A, perpendiculaire ou approximativement perpendiculaire au sens d'avancement de la tête de récolte, en cours de travail, est réalisé au moyen d'un moteur (non représenté), de préférence au moyen d'un moteur hydraulique. En cours de travail, le tambour de ramassage 1 se trouve en contact avec le sol S par l'intermédiaire de ses pales radiales 2, de sorte que l'entraînement en rotation dudit tambour vers le haut, en considérant le sens d'avancement de la machine en cours de travail (flèche f2), génère un mouvement de balayage et un entraînement ascensionnel des produits balayés.

Le tambour de ramassage 1 est logé dans une enveloppe 3 dont la partie frontale 3a de forme approximativement hémicylindrique entoure étroitement la partie avant et la partie supérieure dudit tambour, cette enveloppe se prolongeant en direction de l'arrière de ladite partie supérieure. De manière avantageuse, la surface interne de cette enveloppe ou carter enveloppant 3 permettant le guidage des fruits ramassés, vers l'arrière du tambour de balayage 1, est réalisée dans une matière souple ou semi-rigide maintenue en forme par des renforts extérieurs rigides.

Comme cela est souligné dans le document EP-1.224.854, la surface interne de l'enveloppe 3 doit être la plus lisse possible pour favoriser le glissement des fruits durant leur trajectoire en direction du convoyeur trieur C dont l'extrémité de chargement 4 se trouve disposée en arrière du tambour de ramassage. D'autre part, lors de la rotation du tambour 1, les pales souples 2 de celui-ci frottent sur la surface interne de l'enveloppe 3. Les chocs résultant de la rencontre des pales 2 avec l'enveloppe 3 engendrent des vibrations qui, combinées au frottement desdites pales sur la surface interne de ladite enveloppe, évitent la formation de dépôts de terre et de débris divers sur la partie inférieure de celle-ci.

Le bord transversal inférieur de la partie avant de l'enveloppe ou carter enveloppant se trouve disposé à distance du sol S, de sorte qu'un passage 5 se trouve ménagé entre le sol et ledit bord, la hauteur de ce passage étant fonction de la destination des machines de ramassage et, plus précisément, de la taille des fruits à la récolte desquels sont plus spécialement destinées ces machines.

Selon une première disposition caractéristique de l'invention, la hauteur du passage réservé au-dessous du bord inférieur avant du carter enveloppant est régulée au moyen d'une jupe mobile 6 montée au travers dudit passage, cette jupe mobile étant assujettie à des moyens assurant son soulèvement automatique lorsqu'elle rencontre une pression ou résistance lors de l'avancement de la tête de récolte et son retour en position basse lorsque cesse cette pression. Cette jupe est ainsi montée avec une aptitude de montée et de descente par rapport à la partie frontale de l'enveloppe 3.

Selon un mode d'exécution avantageux, la jupe mobile 6 ou jupe active, est montée en avant et quasiment au contact du tambour de ramassage 1-2, avec une aptitude de déplacement arrière - avant. Par exemple, la jupe active 6 est montée avec une aptitude de pivotement autour d'un axe horizontal A1, par l'intermédiaire de sa partie supérieure, comme cela est expliqué dans la suite du présent exposé.

De la sorte, le soulèvement de ladite jupe active 6 est réalisé par le tambour de ramassage rotatif 1 lorsque cette dernière se trouve repoussée contre ledit tambour, sous la pression résultant de la rencontre de fruits ou débris divers répandus sur le sol. Dans cette situation, la jupe active se trouve entraînée par friction vers le haut, par les pales 2 du tambour de ramassage 1 qui tournent en remontant, autour de l'axe dudit tambour. Lorsque la jupe active ne rencontre plus qu'une résistance négligeable à l'avancement, elle redescend par gravité en position basse. Le retour en position basse de la jupe active 6 pourrait aussi être assisté par la prévision de ressorts (non représentés) reliant, par exemple, chaque bras pivotant 7 à un élément latéral rigide du châssis de la tête de récolte.

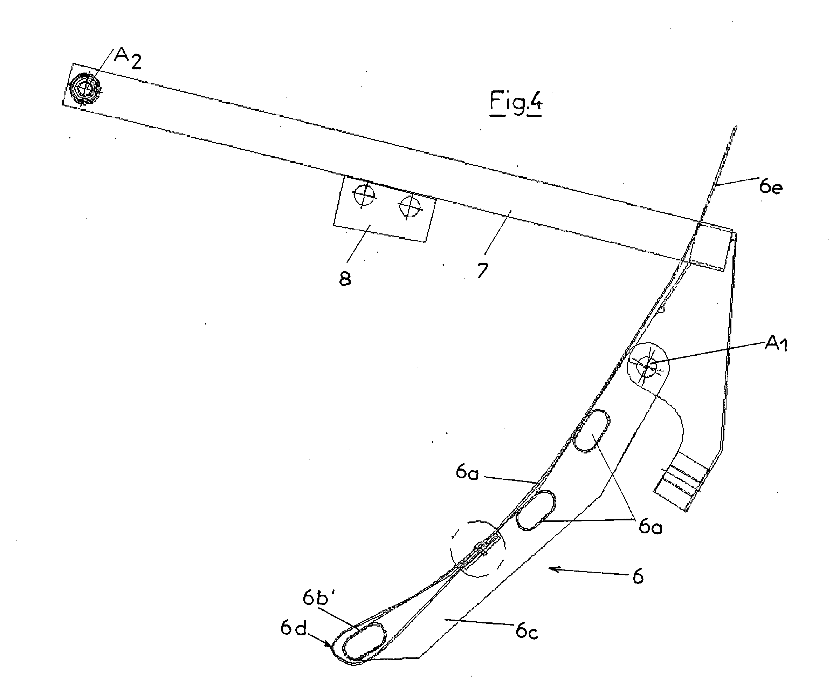

La jupe active 6 présente un profil courbe dont la concavité est orientée en direction du tambour de ramassage 1-2, cette jupe active ayant par exemple approximativement la forme d'une portion de cylindre de rayon identique ou sensiblement identique au rayon de la partie frontale 3a de l'enveloppe 3. La surface interne 6a de la jupe active 6 est réalisée dans un matériau souple tel que caoutchouc ou élastomère de synthèse et elle est maintenue en forme par une armature rigide, par exemple constituée d'un ou plusieurs renforts horizontaux 6b, 6b' fixés à des éléments latéraux verticaux 6c. Un renfort inférieur 6b' est avantageusement logé dans un ourlet 6d constituant le bord inférieur de la jupe active (figure 4).

De préférence, la surface ou enveloppe interne 6a de la jupe active 6 est formée d'une seule pièce avec la paroi souple constituant la face interne de l'enveloppe 3.

La jupe active est suspendue, latéralement, aux extrémités avant de bras pivotants 7, avec une aptitude de basculement autour d'un axe horizontal A1, par l'intermédiaire de ses éléments latéraux 6c et au moyen d'articulations. Les extrémités opposées des bras latéraux 7 sont attachées avec une latitude de pivotement autour d'un axe horizontal A2, par l'intermédiaire d'articulations, à un élément rigide du châssis de la tête de récolte.

D'autre part, des moyens de butée limitent le mouvement angulaire vers le bas de la jupe active 6, ces moyens étant par exemple constitués par des butées 8 portées par des éléments latéraux rigides du châssis de la tête de récolte et disposées sur la trajectoire descendante des bras pivotants 7. Ces butées sont disposées à un emplacement tel que lorsque les bras pivotants 7 s'appuient sur ces dernières, en position de repos, le bord inférieur de la jupe mobile 6 se trouve en contact avec le sol. Ces butées n'interviennent donc pas en cours de travail ; elles constituent seulement une sécurité empêchant que la jupe active ne bascule sous la tête de récolte lorsqu'on soulève la machine.

Lorsque la machine se déplace sur un terrain dégagé, le bord inférieur de la jupe active 6 glisse sur le sol, en suivant le relief dudit terrain.

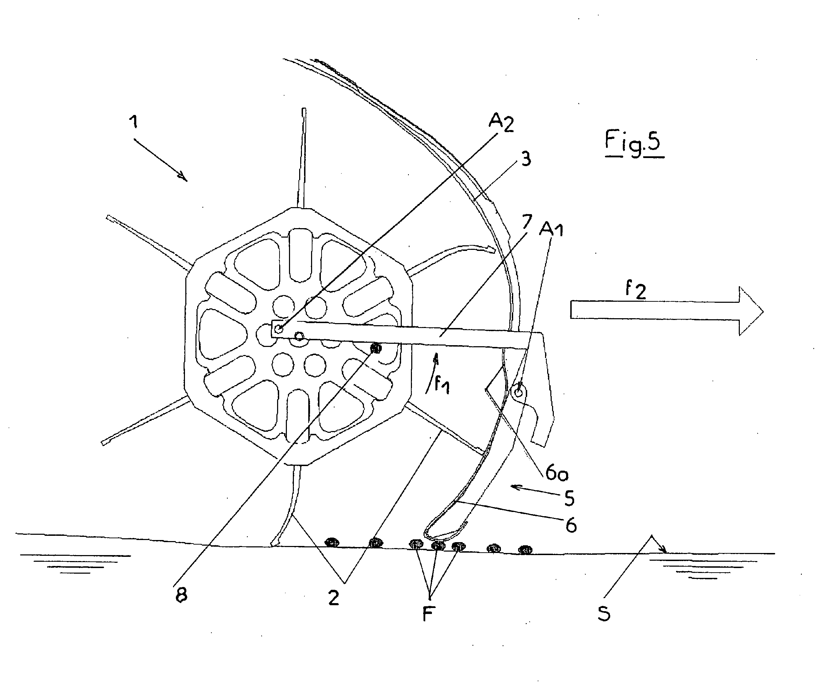

Le fonctionnent de la tête de récolte selon l'invention est décrit ci-après en se reportant aux figures 3, 5, 6 et 7.

Lorsque la jupe active 6 ne rencontre pas d'obstacle (figure 3), cette dernière occupe sa position basse stable, les bras pivotants 7 reposent sur les butées 8 et les pales de balayage 2 sont tangentes à la surface interne de ladite jupe et n'exercent aucune friction sur celle-ci. Dans cette situation, et comme indiqué ci-dessus, le bord inférieur de la jupe active 6 glisse sur le sol S.

Lorsque la jupe active 6 rencontre une couche essentiellement formée d'olives ou autres fruits F éparpillés sur le sol, ladite jupe reçoit des impulsions tendant à la repousser ; elle pivote alors vers l'arrière, autour de l'axe A1, et se trouve pressée contre le tambour de ramassage 1. Les pales de balayage 2 frottent alors sur la surface interne de ladite jupe et entraînent, par friction, la rotation de l'ensemble 6-7 autour de l'axe A2. La jupe active se trouve soulevée pour laisser entrer les fruits F dans la zone de balayage.

La rencontre des fruits F génère des impulsions de force réduite, et, par conséquent, une friction des pales de balayage sur la face interne de la jupe active également de force réduite, de sorte que ladite jupe se trouve soulevée sur une hauteur limitée à chaque impulsion reçue et retombe aussitôt dès que cessent les effets de cette impulsion. Dans une telle situation, la jupe active effectue ainsi une succession de mouvements rapides de soulèvement et de retombée d'amplitude réduite.

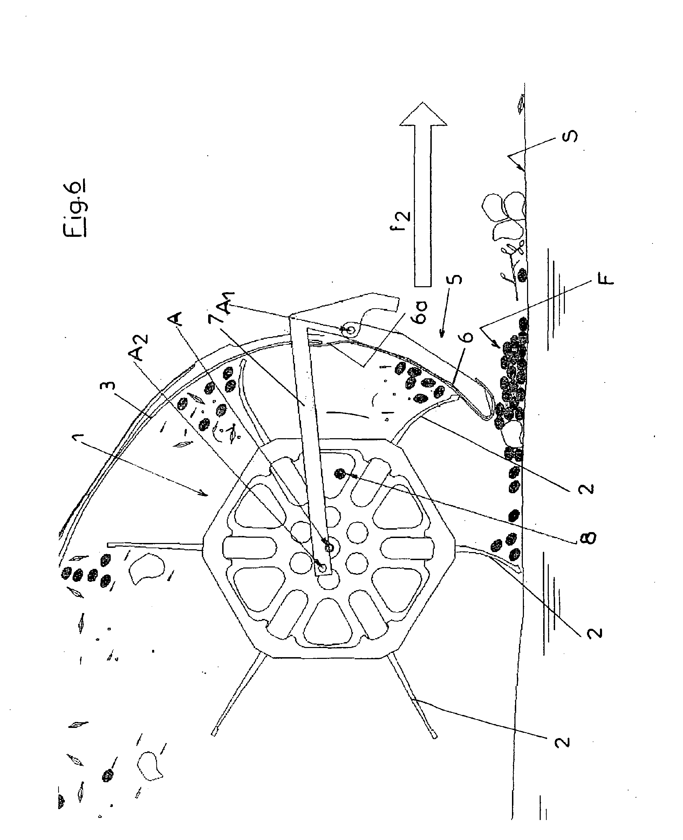

Le système de l'invention agit de façon comparable lors de la rencontre d'amas de fruits F ou de débris plus volumineux d'origine diverse (branches, brindilles, pierres, etc.). Dans ce cas (figure 6), la pression exercée par lesdits fruits et/ou débris éparpillés sur le sol, sur la jupe mobile et, par conséquent, la friction des pales de balayage sur la face interne de ladite jupe, sont plus fortes, de sorte que cette dernière se trouve soulevée sur une hauteur plus importante en laissant entrer les amas de fruits et les débris divers dans la zone de balayage. Dans une telle situation, la jupe active effectue une succession de mouvements rapides de soulèvement et de retombée d'amplitude plus importante.

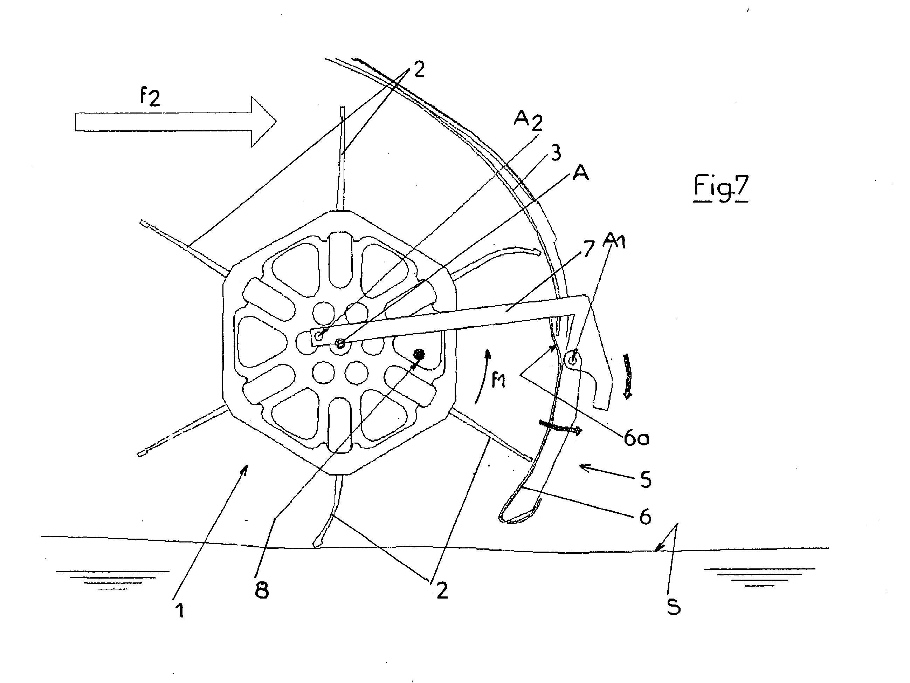

Lorsque la jupe active 6 ne subit plus aucune force de pression tendant à la repousser vers l'arrière en raison de l'absence d'obstacle (Figure 7), elle pivote vers l'avant, autour de l'axe A1, par effet de gravité ou sous l'action d'au moins un ressort de rappel (non représenté), de sorte qu'elle sort de la trajectoire des pales de balayage 2 du tambour de ramassage 1, et qu'il n'y a plus de frottement desdites pales de balayage sur la surface interne de la jupe active qui retombe alors en position basse initiale.

## Revendications

1. Tête de récolte pour machine de ramassage de produits agricoles répandus sur le sol, du genre comprenant un tambour de ramassage rotatif (1), par exemple muni de pales de balayage (2) angulairement espacées ou constitué par une brosse cylindrique, et dont les parties antérieure et supérieure se trouvent recouvertes par une enveloppe ou carter enveloppant (3) dont le bord inférieur avant est disposé à distance du sol (S) de sorte qu'un passage (5) se trouve ménagé entre le sol et ledit bord inférieur, ce passage (5) étant obturé par une jupe mobile (6), montée avec une aptitude de montée et de descente par rapport à la partie frontale (3a) de l'enveloppe (3) en avant et quasiment au contact du tambour de ramassage (1-2), **caractérisée en ce que** ladite jupe mobile ou jupe active (6) est montée avec une aptitude de pivotement autour d'un axe horizontal (A1) par l'intermédiaire de sa partie supérieure, et **en ce qu'**elle est également montée avec une aptitude de déplacement arrière-avant, de sorte que le soulèvement de la jupe mobile ou jupe active (6) est assuré, automatiquement par friction, au contact dudit tambour de ramassage rotatif (1-2), lorsque ladite jupe active (6) se trouve repoussée contre ce dernier, lors de la rencontre de fruits (F) et/ou autres débris répandus sur le sol, durant les déplacements vers l'avant de la machine, en cours de travail, de sorte à adapter en permanence la hauteur dudit passage à la quantité et à la conformation desdits fruits (F) et/ou des débris.

2. Tête de récolte suivant la revendication 1, **caractérisée en ce que** la jupe active (6) présente un profil courbe dont la concavité est orientée en direction du tambour de ramassage (1, 2).

3. Tête de récolte suivant l'une des revendications 1 ou 2, **caractérisée en ce que** la face ou enveloppe interne (6a) de la jupe active (6) est réalisée dans un matériau souple.

4. Tête de récolte selon la revendication 3, **caractérisée en ce que** la face ou enveloppe interne souple (6a) de la jupe active (6) est formée d'une seule pièce avec la face ou enveloppe interne du carter enveloppant (3) de ladite tête de récolte.

5. Tête de récolte selon l'une quelconque des revendications 2 à 4, **caractérisée en ce que** la jupe active (6) est supportée, latéralement, par des bras pivotants (7), et **en ce que** ladite jupe active est suspendue auxdits bras pivotants (7) avec une aptitude de pivotement autour d'un axe horizontal (A1).

6. Tête de récolte suivant l'une quelconque des revendications 1 à 5, **caractérisée en ce que** la jupe active (6) revient en position basse par effet de gravité lorsqu'elle n'est plus soumise à une pression tendant à la repousser vers l'arrière, ou sous l'action d'au moins un ressort de rappel.

7. Tête de récolte suivant l'une quelconque des revendications 1 à 6, **caractérisée en ce qu'**elle comporte des butées (8) limitant le déplacement angulaire vers le bas de la jupe active (6).

8. Machine de ramassage de produits agricoles répandus sur le sol, **caractérisée en ce qu'**elle est pourvue d'une tête de récolte réalisée selon l'une quelconque des revendications 1 à 7.

## Claims

1. A harvesting head for a machine for picking up agricultural products spread out on the ground, of the type comprising a rotating pick up drum (1), for example provided with sweep blades (2) being angularly spaced or constituted by a cylindrical brush, and the anterior and posterior parts of which are covered by an envelope or surrounding casing (3), the lower edge of which is arranged remotely from the ground (S) so that a passage (5) is provided between the ground and said lower edge, said passage (5) being blocked by a mobile skirt (6), mounted with an ascent and descent ability relative to the front part (3a) of the envelope (3) in front and almost in contact with the pick up drum (1-2), **characterized in that** said mobile skirt or active skirt (6) is mounted with a pivoting ability around an horizontal axis (A1) via its upper part, and **in that** it is also mounted with a back-forward displacement ability, so that the lifting of the mobile skirt or active skirt (6) is automatically provided by friction, in contact with said rotating pick up drum (1-2), when said active skirt (6) is forced against this latter, upon meeting fruit (F) and/or other debris spread out on the ground, during the forward movements of the machine, while working, in order to permanently adapt the height of said passage to the quantity and conformation of said fruit (F) and/or debris.

2. A harvesting head according to claim 1, **characterized in that** the active skirt (6) presents a curved profile, the concavity of which is oriented towards the pick up drum (1, 2).

3. A harvesting head according to any one of claims 1 and 2, **characterized in that** the face or inner envelope (6a) of the active skirt (6) is made in a flexible material.

4. A harvesting head according to claim 3, **characterized in that** the flexible face or inner envelope (6a) of the active skirt (6) is integrally formed with the face or inner envelope of the surrounding casing (3) of said harvesting head.

5. A harvesting head according to any one of claims 2 to 4, **characterized in that** the active skirt (6) is laterally supported by pivoting arms (7), and **in that** said active skirt is suspended from said pivoting arms (7) with a pivoting ability around an horizontal axis (A1).

6. A harvesting head according to any one of claims 1 to 5, **characterized in that** the active skirt (6) returns back to the low position by the effect of gravity when it is no more subjected to a pressure tending to force it backwards, or under the action of at least a return spring.

7. A harvesting head according to any one of claims 1 to 6, **characterized in that** it comprises abutments (8) limiting the downward angular movement of the active skirt (6).

8. A machine for picking up agricultural products spread out on the ground, **characterized in that** it is provided with a harvesting head made according to any one of claims 1 to 7.

## Patentansprüche

1. Erntekopf für Maschine zum Einsammeln von auf dem Erdboden liegenden landwirtschaftlichen Erzeugnissen, vom Typ umfassend eine drehende Sammeltrommel (1), zum Beispiel ausgerüstet mit Kehrblättern (2) in winkeligen Abständen oder bestehend aus einer zylinderförmigen Bürste, und deren vordere und obere Bereiche durch eine Verkleidung oder ein verkleidetes Gehäuse bedeckt werden (3), deren/dessen vordere untere Kante in einer Entfernung vom Boden (S) so angebracht ist, dass eine Öffnung (5) zwischen dem Boden und der besagten unteren Kante ausgespart wird, diese Öffnung (5) wird durch eine bewegliche Schürze (6) verschlossen, montiert mit einer Steig- und Senkfähigkeit in Bezug auf den vorderen Bereich (3a) der Verkleidung (3) nach vorn und fast in Kontakt mit der Sammeltrommel (1-2), **dadurch gekennzeichnet, dass** die besagte mobile Schürze oder aktive Schürze (6) mit einer Drehfähigkeit um eine horizontale Achse (A1) über ihren oberen Teil montiert ist, und **dadurch**, dass sie ebenfalls mit einer Fähigkeit zu einer Bewegung rückwärts-vorwärts montiert ist, so dass das Anheben der besagten mobilen bzw. aktiven Schürze (6) automatisch durch Reibung, im Kontakt mit der besagten Sammeltrommel (1-2) gewährleistet ist, wenn die aktive Schürze (6) gegen letztere beim Treffen auf Früchte (F) und/oder andere Teile auf dem Erdboden gestossen wird, während sich die Maschine während des Arbeitsvorgangs vorwärts bewegt, so dass die Höhe der besagten Öffnung permanent an die Menge und Formgebung der besagten Früchte (F) und/oder Teile angepasst wird.

2. Erntekopf nach Anspruch 1, **dadurch gekennzeichnet, dass** die aktive Schürze (6) ein gerundetes Profil hat, dessen konkave Form in Richtung der Sammeltrommel ausgerichtet ist (1, 2).

3. Erntekopf nach einer der Ansprüche 1 oder 2, **dadurch gekennzeichnet, dass** die Vorderseite bzw. die innere Verkleidung (6a) der aktiven Schürze (6) aus einem weichen Material besteht.

4. Erntekopf nach Anspruch 3, **dadurch gekennzeichnet, dass** die Vorderseite oder die weiche innere Verkleidung (6a) der aktiven Schürze (6) mit der Vorderseite oder der inneren Verkleidung des verkleideten Gehäuses (3) des besagten Erntekopfes aus einem Stück besteht.

5. Erntekopf nach einem der Ansprüche 2 bis 4, **dadurch gekennzeichnet, dass** die aktive Schürze (6) seitlich durch Dreharme gehalten wird (7), und **dadurch**, dass die besagte aktive Schürze an den besagten Dreharmen (7) mit der Fähigkeit der Drehung um eine horizontale Achse (A1) hängt.

6. Erntekopf nach einem der Ansprüche 1 bis 5, **dadurch gekennzeichnet, dass** die aktive Schürze (6) durch die Wirkung der Gravitation in die tiefe Position zurück gelangt, sobald sie nicht mehr einem Druck ausgesetzt ist, der darauf zielt, sie nach hinten zu stossen, oder aufgrund des Wirkens von mindestens einer Rückholfeder.

7. Erntekopf nach einem der Ansprüche 1 bis 6, **dadurch gekennzeichnet, dass** er Anschläge (8) besitzt, welche die winkelförmige Bewegung der aktiven Schürze nach unten begrenzen (6).

8. Maschine zum Einsammeln von auf dem Erdboden liegenden landwirtschaftlichen Erzeugnissen, **dadurch gekennzeichnet, dass** sie mit einem Erntekopf ausgerüstet ist, der entsprechend einem der Ansprüche 1 bis 7 konzipiert wurde.
